# EUROPÄISCHE PATENTANMELDUNG

(11) **EP 1 067 783 A2**
(43) Veröffentlichungstag der Anmeldung: **10.01.2001**
(21) Anmeldenummer: 00202275.4
(22) Anmeldetag: 29.06.2000
(51) Int. Cl.: H04N 5/44

(54) **Modulare Bedieneinrichtung für videotechnische Geräte**

(30) Priorität: 07.07.1999 DE 19931202
(71) Anmelder: Philips Corporate Intellectual Property GmbH, 52064 Aachen (DE); Koninklijke Philips Electronics N.V., 5621 BA Eindhoven (NL)
(72) Erfinder: Boll, Roman, Philips Corp. Intellectual Prop. GmbH, 52064 Aachen (DE)
(74) Vertreter: Volmer, Georg, Dipl.-Ing.

(57) **Zusammenfassung**

Die Erfindung betrifft eine Bedieneinrichtung für videotechnische Geräte. Um eine größere Flexibilität bei solchen Bedieneinrichtungen zu erreichen, wird vorgeschlagen, dass die Bedieneinrichtung wenigstens aus einem Bedienmodul (31) und einem Steuermodul (32) besteht, wobei das Steuermodul (32) eine erste Schnittstelle (37) zum Anschluss an eine Steuereinrichtung (2) sowie wenigstens eine zweite Schnittstelle (35) zum Anschließen des Bedienmoduls (31) aufweist und das Bedienmodul (31) wenigstens eine Schnittstelle (34) zum Anschluss an das Steuermodul (32) aufweist.

## Beschreibung

Die Erfindung betrifft eine Bedieneinrichtung für videotechnische Geräte.

Bedieneinrichtungen für videotechnische Geräte, weisen im allgemeinen Bedienelemente, mittels welchen beispielsweise Schaltvorgänge von einer Bedienperson ausgelöst werden können, Anzeigeelemente zur Benutzerführung und wenigstens eine Schnittstelle, an welcher zu steuernde Geräte wie z.B. Router oder Mischeinrichtungen angeschlossen werden können, auf. Je nach gewählter Schnittstelle zwischen videotechnischem Gerät und Bedieneinrichtung kann die Bedieneinrichtung abgesetzt von den zu steuernden Geräten aufgestellt werden.

Aufgabe der Erfindung ist es, eine Bedieneinrichtung anzugeben, welches ein höheres Maß an Flexibilität gegenüber bekannten Bedieneinrichtung für videotechnische Geräte aufweist.

Diese Aufgabe wird dadurch gelöst, dass die Bedieneinrichtung wenigstens aus einem Steuermodul und einem Bedienmodul besteht, wobei das Steuermodul eine erste Schnittstelle zum Anschluss an eine Steuereinrichtung sowie wenigstens eine zweite Schnittstelle zum Anschließen des Bedienmoduls aufweist und das Bedienmodul wenigstens eine Schnittstelle zum Anschluss an das Steuermodul aufweist.

Durch Aufteilung des Bediengerätes in wenigstens zwei modulare Baugruppen, welche über eine Schnittstelle miteinander kommunizieren können, können die Gehäuseabmessungen der jeweiligen Module auf die im jeweiligen Modul enthaltenen Bauteile angepasst werden. Auf diese Weise kann das Bedienmodul sehr flach und mit geringer Tiefe ausgeführt werden, so dass es auch in Gehäuse mit geringer Einbautiefe eingebaut werden kann. Das Steuermodul, welches Betätigung von Bedienelementen auswertet und Anzeigeelemente ansteuert, kann wegen der Schnittstelle abgesetzt vom Bedienmodul an einer Stelle eingebaut werden, an welcher es auf die Einbautiefe nicht ankommt.

In einer vorteilhaften Ausführungsform nach Anspruch 2 können Steuermodul und Bedienmodul auch direkt, d. h. ohne zwischengeschaltetes Kabel verbunden werden. Vorzugsweise weisen Steuermodul und Bedienmodul Befestigungsmöglichkeiten, wie zum Beispiel Schrauben und hierzu korrespondierende Gewinde auf mittels welcher eine solche Anordnung auch mechanisch miteinander lösbar verbunden werden kann.

Diese Ausgestaltung weist den Vorteil auf, dass Steuermodul und Bedienmodul, in den Anwendungsfällen, die eine entsprechende Einbautiefe aufweisen, wie beispielsweise in einem Gestell, auch als eine mechanische Einheit eingebaut werden können. Dies erleichtert die Handhabung, beispielsweise beim Austausch oder Hinzufügen von weiteren Modulen.

Bei der Ausgestaltung des Bedienmoduls nach Anspruch 3 werden nur wenige elektronische Bauteile im Bedienmodul benötigt, so dass das Bauvolumen sich hierdurch kaum erhöht. Andererseits kann die Anzahl der benötigten Schnittstellenleitung drastisch reduziert werden.

Bei einer Ausgestaltung des Bedienmoduls nach Anspruch 4 kann für unterschiedlich ausgestattete Bedienmodule (z.B. unterschiedliche Anzahl von Bedienelementen) trotzdem immer das gleiche Steuermodul verwendet werden, da die Funktion des Steuermoduls auf Grund des Identifikationscodes des Steuermoduls entsprechend angepasst werden kann.

Eine Ausgestaltung des Steuermoduls nach Anspruch 5 ermöglicht den Aufbau des Bedienmoduls nach Anspruch 3.

Die Erfindung wird nun anhand eines in der Zeichnung dargestellten Ausführungsbeispiels näher beschrieben und erläutert.

Es zeigen:
- Fig. 1: Die erfindungsgemäße modulare Bedieneinrichtung im Zusammenwirken mit einem Signalrouter
- Fig. 2: Schaltschema eines Bedienmoduls

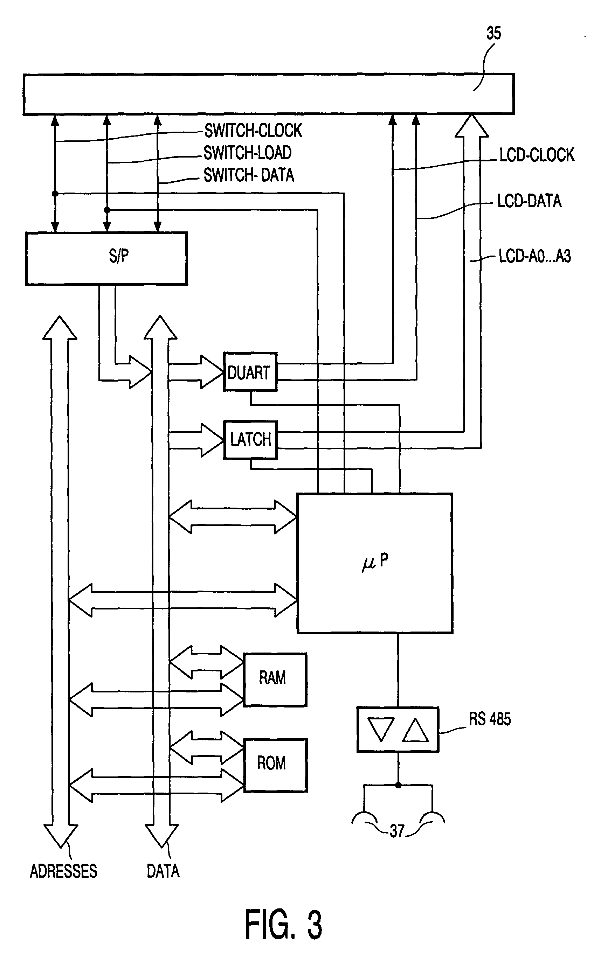

- Fig. 3: Schaltschema eines Steuermoduls

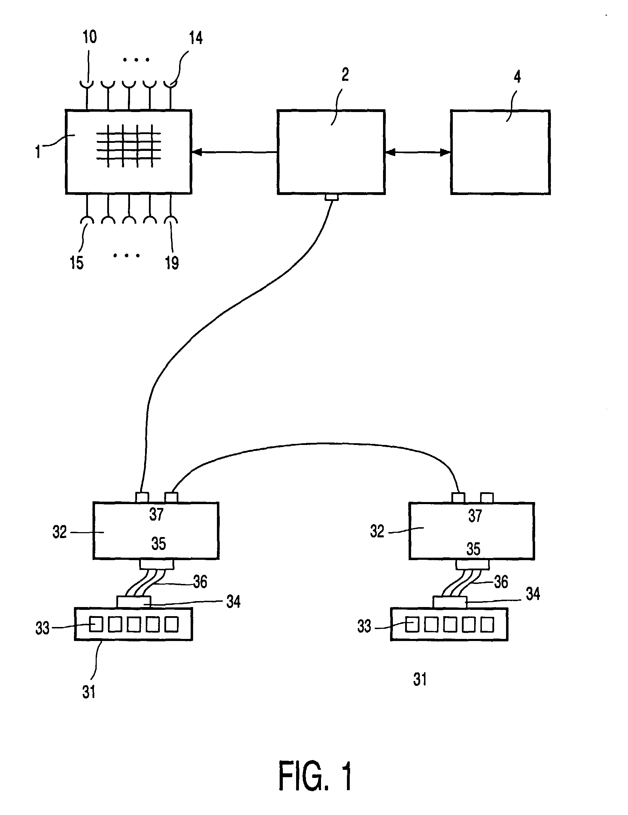

In Figur 1 ist die Erfindung dargestellt am Beispiel eines sogenannten Routers. Der Router enthält ein digitales Koppelfeld 1 mittels welchem an Eingängen 10 ... 14 anschließbare Signalquellen mit an Ausgängen 15 ... 19 anschließbaren Signalsenken wahlfrei verbunden werden können. Die zu 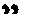 routenden" Signale sind sowohl Videosignale als auch Audiosignale. Ein Steuergerät 2, welches entsprechende Schaltbefehle von einem Bediengerät 3 erhält, steuert entsprechend den Schaltbefehlen das digitale Koppelfeld 1.

Im Ausführungsbeispiel ist das Bediengerät aus mehreren Modulpaaren 3 gebildet. In der einfachsten Ausbaustufe kann das Bediengerät auch aus nur einem einzigen Modulpaar 3 gebildet sein. Jedes Modulpaar 3 besteht aus einem Bedienmodul 31 und einem Steuermodul 32. Das Bedienmodul 31 weist sechzehn nebeneinanderliegende Tasten 33 auf, wobei jede Taste eine Flüssigkristall-Anzeige (LC-Display) mit 36 mal 24 Bildpunkten enthält. Mittels dem LC-Display können Symbole, beispielsweise Pfeile für eine Menüführung als auch alphanumerische Zeichen, beispielsweise zur Anzeige von Namen für Signalquellen und Signalsenken dargestellt werden. Bei 36 mal 24 Bildpunkten können vorzugsweise dreizeiige Anzeigen mit jeweils sechs alphanumerischen Zeichen oder zweizeilige Anzeigen mit vier alphanumerischen Zeichen oder eine einzeilige Anzeige mit zwei alphanumerischen Zeichen realisiert werden. Mit der zweizeiligen Anzeige kann beispielsweise in deren ersten Zeile der Name einer Signalquelle und in der zweiten Zeile der Name einer Signalsenke angegeben werden. Mittels jeder Taste zugeordneter, verschiedenfarbiger Leuchtdioden lässt sich die Hintergrundbeleuchtung der LCD-Anzeigen unterschiedlich farbig gestalten. So kann beispielsweise mittels einer grünen Hintergrundbeleuchtung signalisiert werden, dass die im Anzeigefeld angezeigte Signalquelle bzw. Signalsenke noch nicht miteinander verbunden sind. Werden durch Drücken der betreffenden Taste Signalquelle und Signalsenke verbunden, wird diese Verbindung durch eine rote Hintergrundbeleuchtung signalisiert.

Mittels einer siebzehnten Taste kann ein Bedienmenü aufgerufen werden, mittels welchem beispielsweise die einer jeden Taste zugeordnete Funktion geändert werden kann.

Das Bedienmodul 31 enthält als mechanische Komponenten handelsübliche Taster mit integriertem LC-Display und integrierter Hintergrundbeleuchtung sowie eine Schnittstelle, welche im folgenden zur Unterscheidung von anderen Schnittstellen als Bedienelementeschnittstelle bezeichnet wird. Da diese handelsüblichen Taster mit integriertem LC-Display und integrierter Hintergrundbeleuchtung bereits eine Elektronik zur Ansteuerung integriert haben (Anzeige und Hintergrundbeleuchtung werden über serielle Datenwörter gesteuert) könnte das Bedienmodul auch gänzlich ohne zusätzliche Elektronik auskommen. Dies würde aber dazu führen, dass die Bedienelementeschnittstelle eine Vielzahl von parallelen Anschlüssen aufweisen müsste.

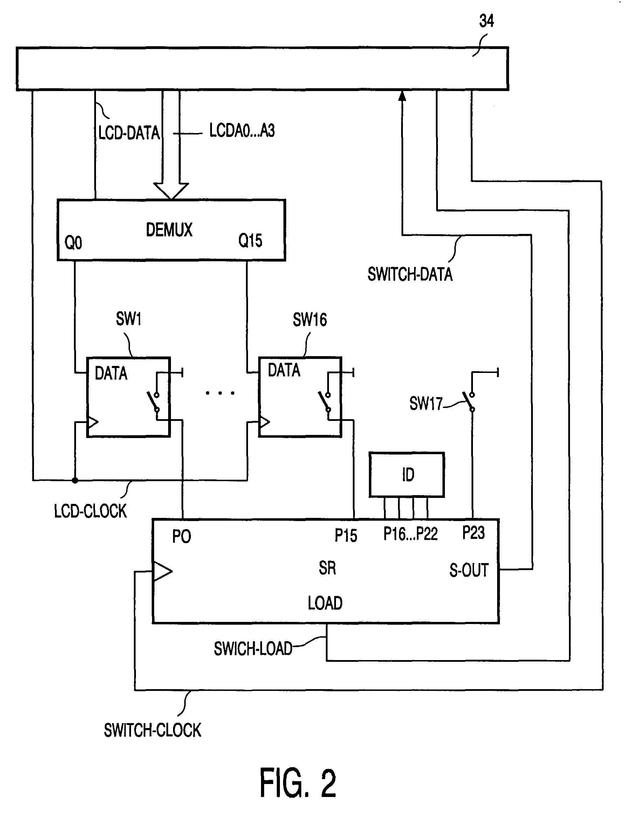

Figur 2 zeigt den im Ausführungsbeispiel bevorzugten Kompromiss zwischen Bauteilaufwand (= benötigtes Volumen) und Anzahl von Schnittstellenleitungen. Der Zustand der einzelnen Taster SW1 ... SW16, des Tasters SW17 für den Aufruf des Bedienmenüs, sowie ein sieben Bit umfassender verdrahteter Code ID zur Identifizierung des Bedienmoduls wird mittels eines Schieberegisters SR mit vierundzwanzig Eingängen zu einem seriellen Datenstrom SWITCH_DATA zusammengefasst. Auf diese Weise werden nur drei Signalleitungen benötigt: eine Datenleitung SWITCH_DATA die mit dem Datenausgang S_OUT des Schieberegisters SR verbunden ist, eine Steuerleitung SWITCH_LOAD zum Laden des Schieberegisters SR und eine Taktleitung SWITCH_CLOCK zum seriellen Auslesen des Schieberegisters SR. Die seriellen Datenstöme zur Ansteuerung der LC-Displays werden mittels eines Demultiplexers DEMUX auf die einzelnen Dateneingänge DATA der Taster SW1 ... SW 16 aufgeteilt. Wegen der sechzehn in den Tasten integrierten LC_Displays wird zur Ansteuerung des Demultiplexers DEMUX ein Adressbus LCD_A0 ... A3 mit vier Leitungen benötigt. Mit einer Taktleitung LCD_CLOCK wird die Übernahme der Daten von den Ausgängen Q0 ... Q15 des Demultiplexer DEMUX gesteuert. Auf diese Weise werden zur Ansteuerung der Taster SW1 ... SW16 nur sechs Signalleitungen benötigt. Hinzukommen nicht dargestellte Leitungen zur Stromversorgung. Demultiplexer DEMUX und Schieberegister SR sind der Übersicht wegen als einzelne Bauelemente dargestellt. Dies stellt jedoch keine Begrenzung der Erfindung auf solche Bauteile dar. Tatsächlich ist der Demultiplexer aus zwei gleichen Demultiplexerbausteinen und das Schieberegister aus drei gleichen einzelnen Schieberegistern zusammengesetzt. Da das Angebot von handelsüblichen Bauteilen im Laufe der Zeit stetig zunimmt, muss es dem Fachmann überlassen bleiben, unter den verfügbaren Bauteilen entsprechend geeignete Bauteile auszuwählen.

Da sich das Bedienmodul 31 bei den elektronischen Komponenten auf einen Demultiplexer DEMUX zur Ansteuerung der LC-Anzeigeelemente und einem Schieberegister SR zur Zusammenfassung der Schaltzustände der Taster beschränkt, sind die Abmessungen des Bedienmoduls 31 im wesentlichen nur von den Bedien- und Anzeigeelementen vorgegeben.

Beim Bedienmodul 31 ist die Bedienelementeschnittstelle als Stecker 34 ausgebildet. Das Steuermodul weist eine hierzu korrespondierende, als Buchse 35 ausgebildete Bedienelementeschnittstelle auf. Auf diese Weise können Bedienmodul 31 und Steuermodul 32 auch direkt, d.h. ohne Zwischenschaltung einer elektrischen Leitung 36, miteinander verbunden werden. Mittels zweier Schrauben kann das Steuermodul 32 mit im Gehäuse des Bedienmoduls 31 eingelassenen Einpressmuttern lösbar verbunden werden, um das Modulpaar 3 als mechanische Einheit in ein Gestell einzubauen. Vorzugsweise entspricht hierbei die Höhe des Steuermoduls 32 höchstens der Höhe des Bedienmoduls 31 um mehrere Bedienmodule ohne Zwischenraum untereinander anordnen zu können. Bei Einbau des Bedienmoduls 31 in ein flaches Gehäuse, beispielsweise einem Pultgehäuse, können diese Schrauben gelöst und Bedienmodul und Steuermodul mittels eines Kabels 36 mit entsprechendem Stecker und Buchse miteinander verbunden werden. Mit der in Figur beschriebenen Ausgestaltung der Bedienelementeschnittstelle können Bedienmodul 31 und Steuermodul 32 bis zu einem Meter voneinander getrennt eingebaut werden. Dies ist für den gedachten Anwendungsfall ausreichend. Durch zusätzliche Treiberbausteine etc. können natürlich auch größere Entfernungen überbrückt werden.

Das Steuermodul 32 enthält im wesentlichen einen Prozesser µP und flüchtige sowie nichtflüchtige Speicher RAM, ROM zur Aufnahme von variablen Daten, beispielsweise den Namen der anzuzeigenden Datenquellen und Datensenken sowie zur Aufnahme der Befehlsdaten. Mittels eines Serien-Parallel-Umsetzers S/P, welcher beispielsweise mittels eines Schieberegisters realisiert sein kann, werden die Tastenzustände und der ID-Code des Bedienmoduls 31 in drei Datenwörter von acht Bit umgesetzt und über den Datenbus DATA dem Prozessor µP zugeführt. Aus den Datenwörtern, die Schaltzustände der Taster SW1 ... SW17 enthalten, erzeugt der Prozessor µP entsprechende Steuerbefehle, welche über eine weitere Schnittstelle, welche im folgenden als Steuergeräteschnittstelle 37 bezeichnet wird, an das Steuergerät 2 weitergeleitet werden.

Mittels des ausgelesenen Identifizierungscodes ID kann der Prozessor unterschiedliche Bauarten von Bedienmodulen unterscheiden und dies dem Steuergerät 2 mitteilen. Auf diese Weise kann das Steuergerät 2 erkennen aus wievielen und welchen Bedienmodulen ein Bediengerät aktuell zusammengesetzt ist. Dies ermöglicht eine sehr einfache Erweiterbarkeit eines Bediengerätes, indem lediglich neue oder andere Modulpaare hinzugefügt oder entfernt werden können. Zum Bedienen eines Menüs werden weniger als sechzehn Tasten benötigt. Hierfür kann dann ein Bedienmodul mit weniger Tasten eingesetzt werden, welches auch schon optisch eine andere Funktion signalisiert. Anhand der Identifizierung kann der Prozessor µP daher erkennen welches Bedienmodul als dediziertes Menütastenfeld verwendet werden soll. Dies ist sehr benutzerfreundlich, weil auf diese Weise Fehlkonfigurationen durch einen Benutzer vermieden werden.

Vom Steuergerät 2 über die Steuergerätschnittstelle empfangene Informationen werden vom Prozessor µP des Steuermoduls 32 zur Ansteuerung der LC-Displays in die beim Bedienmodul beschriebenen gemultiplexten Datenstrom umgesetzt. Hierzu werden entsprechende Daten zur Ansteuerung der LC-Displays vom Datenbus DATA ausgelesen und mittels eines Parallel-Seriel-Umsetzers, welcher durch vom Prozessor µP entsprechend angesteuerte Zwischenspeicher LATCH, DUART gebildet ist, zu dem beschriebenen seriellen Datenstrom zusammengefasst.

Für die Übertragung der Daten vom Steuermodul 32 zum Steuergerät 2 und zurück wird ein propriatäres Protokoll verwendet. Die Steuergeräteschnittstelle 35 ist als RS-485 Schnittstelle ausgeführt, so dass Bediengerät und Steuergerät bis zu 1200 m voneinander entfernt aufgestellt werden können. Vorzugsweise ist die Steuergeräteschnittstelle 37 am Steuermodul 32 doppelt ausgeführt, so dass mehrere Steuermodule leicht kaskadiert werden können. Auf diese Weise werden auch die jeweiligen Bedienmodule kaskadiert, wobei davon ausgegangen wird, dass die Bedienmodule hierzu untereinander angeordnet werden.

Hierdurch kann die Benutzerführung vereinfacht werden. Ein oder mehrere Bedienmodule zeigen die zur Auswahl stehenden Signalquellen an, während ein oder mehrere Bedienmodule die zur Auswahl stehenden Signalsenken anzeigen und ein Bedienmodul, beispielsweise das unterste, kann ausschließlich zur Eingabe von Steuerbefehlen vorbehalten bleiben. Durch direkt hintereinander erfolgende Betätigung einer Signalquelle und einer Signalsenke zugeordnetem Taster können die auf diese Weise ausgewählte Signalquelle und Signalsenke einander zugeordnet werden. Die Bedienerführung ist so ausgestaltet, dass die Anzeigen zeilenweise nach oben oder unten 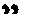 gescrollt" werden können.

In einem Speichermodul 4, welches beispielsweise aus einem handelsüblichen Personal Computer mit Festplatte gebildet ist, können unterschiedliche Konfigurationen erstellt und gespeichert werden. Beim Einschalten der Modulpaare ruft der Prozessor jedes Modulpaares über Befehle die zuletzt aufgerufene Konfiguration über das Steuergerät 2 vom Speichermodul 4 ab. Mit Menübefehlen lassen sich dann andere gespeicherte Konfigurationen Laden. Vorzugsweise erfolgt die Verbindung von Steuergerät 2 und Personal Computer über eine Netzwerkverbindung.

## Patentansprüche

1. Bedieneinrichtung für videotechnische Geräte welche wenigstens aus einem Bedienmodul (31) und einem Steuermodul (32) besteht, wobei das Steuermodul (32) eine erste Schnittstelle (37) zum Anschluss an eine Steuereinrichtung (2) sowie wenigstens eine zweite Schnittstelle (35) zum Anschließen des Bedienmoduls (31) aufweist und das Bedienmodul (31) wenigstens eine Schnittstelle (34) zum Anschluss an das Steuermodul (32) aufweist.

2. Bedieneinrichtung nach Anspruch 1 bei dem Bedienmodul (31) und Steuermodul (32) so ausgestaltet sind, dass sie mit ihren Schnittstellen direkt verbindbar sind.

3. Bedienmodul (31) für eine Bedieneinrichtung nach Anspruch 1 oder 2 welches als elektronische Komponenten einen Parallel-Seriel-Umsetzer (SR) zur seriellen Ausgabe von Bedienelementzuständen und einen Demultiplexer (DEMUX) zur Ansteuerung von Anzeigemitteln enthält.

4. Bedienmodul nach Anspruch 3
dadurch gekennzeichnet, dass über die Schnittstelle (34) eine Identifizierung (ID) des Bedienmoduls (31) ausgegeben wird.

5. Steuermodul für eine Bedieneinrichtung nach Anspruch 1 oder 2
welches eine Schnittstelle (37) zur Ansteuerung eines videotechnischen Gerätes (1), einen Prozessor (µP) und Speicher (RAM, ROM) zur Erzeugung von Steuerdaten sowie einen Demultiplexer (DEMUX) zur Umsetzung in serieller Form vorliegender Bedienelementzustände sowie einen ParalleL-Seriel-Umsetzer (SR) zur Bündelung von Steuerungsdaten für Anzeigeelemente in einen seriellen Datenstrom enthält.
